# EUROPEAN PATENT APPLICATION

(11) **EP 2 602 720 A1**
(43) Date of publication of application: **12.06.2013**
(21) Application number: 11814524.2
(22) Date of filing: 27.07.2011
(51) Int. Cl.: G06F 13/00

(54) **CONTROL DEVICE, CONTROL SYSTEM, AND CONTROL METHOD**

(30) Priority: 05.08.2010 JP 2010176531
(71) Applicant: Sony Corporation, Tokyo 108-0075 (JP)
(72) Inventor: IGARASHI, Tatsuya, Tokyo 108-0075 (JP)
(74) Representative: Turner, James Arthur
(86) International application number: PCT/JP2011/067130
(87) International publication number: WO 2012/017897

(57) **Abstract**

A control device includes an acquisition part acquiring a control module selected from a plurality of candidates for the control module in which processing procedures regarding control of a controlled apparatus are described, and a controller controlling operation of the controlled apparatus according to the processing procedures in the control module acquired by the acquisition part.

## Description

### Technical Field

The present disclosure relates to a control apparatus, a control system, and a control method.

### Background Art

A network connection function is tending to be built in every apparatus in the present time. For example, home network equipment is spreading compatible with the UPnP (Universal Plug and Play) standard or the DLNA (Digital Living Network Alliance) based on the UPnP standard. Functions of a certain apparatus (controlled apparatus) can be used by another apparatus (control apparatus) based on command control among apparatuses compatible with UPnP/DLNA. For example, reservation recording on a BlueRay Disc Recorder can be performed from a TV receiver. Moreover, photographs stored in a mobile phone can be displayed on a TV set.

Such a control apparatus needs to use a control program for controlling operations of a controlled apparatus. For example, for the purpose of associating home network equipment with a Web application, taking advantage of a browser, it can be considered that the browser is embedded with a plug-in module implemented with a control protocol and that control commands in accordance with DLNA are transmitted from the Web application implemented using script to the controlled apparatus.

Moreover, Patent Literature 1 describes that operations of the controlled apparatus are controlled by the controlled apparatus transmitting functions and control means owned by itself to the connected control apparatus and the control apparatus allowing this control means to be shown for the user performing manipulation.

### Citation List

### Patent Literature

Patent Literature 1: Japanese Patent No. 4235263B

### Summary of Invention

### Technical Problem

However, in any case, there is a problem that the control interface is fixed and lacks the degree of freedom. In the former case, update of the plug-in is needed for dealing with a new device class and adding a new control command, and therefore, there is a problem of lack of extensibility. Moreover, in the latter case, there is a problem that a manipulation screen for the user is limited since only the interface defined by the control means provided from the controlled apparatus can be used. Furthermore, there is a problem that the Web application tends to become complex and that the issue of reciprocal connectivity tends to arise since the control interface most suitable for the Web application cannot be selected to be used when the Web application uses the control means directly.

Thus, the present disclosure is devised in view of the aforementioned circumstances, and the present disclosure aims to provide a control apparatus, a control system, and a control method which are novel and improved and can select and use a control module for controlling operation of a controlled apparatus out of a plurality of candidates.

According to an embodiment of the present disclosure in order to solve the problem, there is provided a control apparatus including an acquisition part acquiring a control module selected from a plurality of candidates for the control module in which processing procedures regarding control of a controlled apparatus are described, and a controller controlling operation of the controlled apparatus according to the processing procedures in the control module acquired by the acquisition part.

### Solution to Problem

According to such a configuration, the control apparatus can control operation of the controlled apparatus using the control module selected from the plurality of candidates of control modules. Thereby, the creator of the program providing functions of the control apparatus can select the control module used for controlling operation of the controlled apparatus.

Further, the control apparatus may further include a selection part selecting the control module used for control of the controlled apparatus out of the plurality of candidates for the control module.

Further, the selection part may acquire a list in which information indicating an acquisition source of a candidate for the control module is described from the controlled apparatus, and select the control module used for control of the controlled apparatus based on the list.

Further, the selection part may select the control module used for control of the controlled apparatus out of the control module described in an application program in which processing procedures of the acquisition part and the selection part is described and control modules in the list.

Further, the list may include the plurality of control modules defining control functions with abstraction degree different from one another.

Further, the list may include information indicating priority of each control module, and the selection part may select the control module used for control of the controlled apparatus based on the priority.

Further, the selection part may select the control module used for control of the controlled apparatus based on the abstraction degree.

Further, the control module may be a program for defining a function regarding operation of the controlled apparatus, and generating a message for performing the function in a form of the controlled apparatus being capable of interpretation thereof.

Further, the application program may allow, by being executed on a browser, the control apparatus to function as the acquisition part and the selection part.

Further, according to another embodiment of the present disclosure in order to solve the problem, there is provided a control system including a controlled apparatus operating according to control from an external device, and a control apparatus including an acquisition part acquiring a control module selected from a plurality of candidates for the control module in which processing procedure regarding control of the controlled apparatus are described, and a controller controlling operation of the controlled apparatus in response to the control module acquired by the acquisition part.

Further, the controlled apparatus may include a storage storing a list including candidate information of the control module.

Further, according to another embodiment of the present disclosure in order to solve the problem, there is provided a control method realized by performance of predetermined processing procedures by a processing part of a control apparatus controlling operation of a controlled apparatus, the processing procedures including, acquiring a control module selected from a plurality of candidates for the control module in which processing procedures regarding control of the controlled apparatus is described, and controlling operation of the controlled apparatus according to the control module acquired in the acquisition step.

### Advantageous Effects of Invention

As described above, according to the present disclosure, a control apparatus, a control system, and a control method can be provided which are novel and improved and can select and use a control module for controlling operation of the controlled apparatus out of a plurality of candidates.

### Brief Description of Drawings

[Fig. 1] Fig. 1 is a configuration diagram of a control system according to one embodiment of the present disclosure.
[Fig. 2] Fig. 2 is an explanatory drawing illustrating a software stack of a control apparatus according to the embodiment.
[Fig. 3] Fig. 3 is an explanatory drawing illustrating a software stack of a controlled apparatus according to the embodiment.
[Fig. 4] Fig. 4 is a block diagram illustrating a functional configuration of the control apparatus according to the embodiment.
[Fig. 5] Fig. 5 is a sequence diagram illustrating operations of the control system according to the embodiment.
[Fig. 6] Fig. 6 is a diagram illustrating one example of UPnP Device Description.
[Fig. 7] Fig. 7 is an explanatory drawing illustrating one example of a control module list.
[Fig. 8] Fig. 8 is a diagram illustrating one example of API definition used for device discovery.
[Fig. 9] Fig. 9 is an explanatory drawing illustrating sample codes of a Web application.
[Fig. 10] Fig. 10 is an explanatory drawing illustrating one example of API definition for controlling the controlled apparatus.
[Fig. 11] Fig. 11 is an explanatory drawing illustrating sample codes when the control module uses the standard API.
[Fig. 12] Fig. 12 is a diagram illustrating one example of extended information regarding device discovery from the Internet.
[Fig. 13] Fig. 13 is a flowchart illustrating operations of the control apparatus in case of application to TV recording service.
[Fig. 14] Fig. 14 is an explanatory drawing illustrating one example of a display screen in the example of Fig. 13.
[Fig. 15] Fig. 15 is an explanatory drawing illustrating one example of a display screen in the example of Fig. 13.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Incidentally, the description is made in the following order.
1. System Configuration
2. Functional Configuration of Control Apparatus
3. Control Operations
4. Example of Control (Recording of TV Program)
5. Example of Effects

### (1. System Configuration)

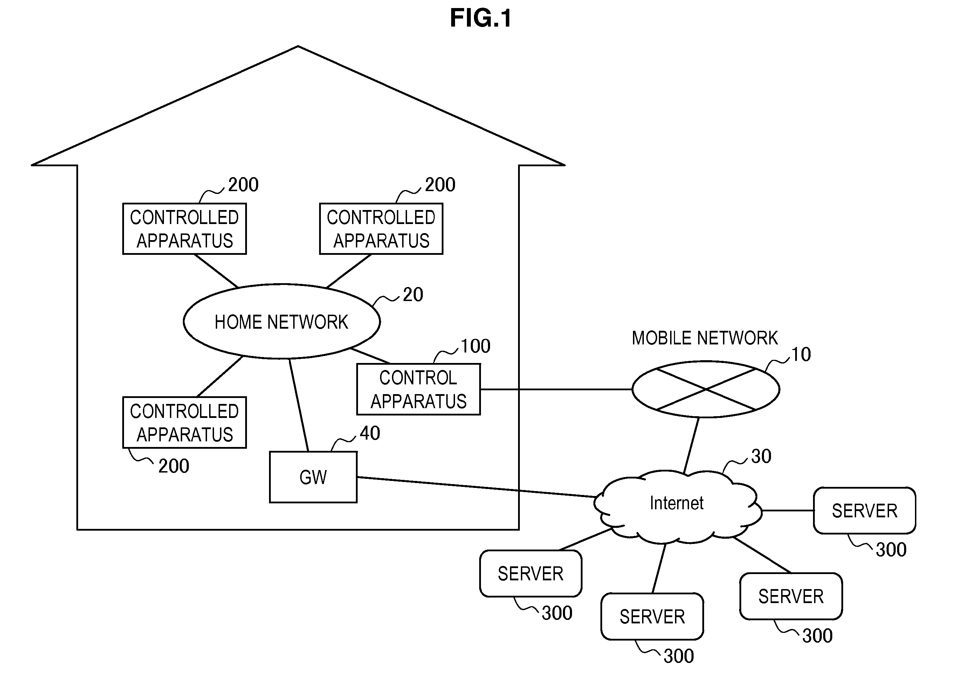

At first, a configuration of a control system 1 according to one embodiment of the present disclosure is described with reference to Fig. 1. Fig. 1 is a configuration diagram of the control system 1 according to the embodiment.

The control system 1 includes a control apparatus 100, controlled apparatuses 200, servers 300, and the control apparatus 100 and controlled apparatuses 200 are connected to a home network 20. Moreover, the home network 20 is connected to the Internet 30 via a gateway 40. Moreover, the control apparatus 100 is also connected to a mobile network 10, and can also be connected to the Internet 30 via the mobile network 10.

In addition, in the specification and drawings, a plurality of constituents having the substantially same functional configuration are distinguished by attaching different alphabetical characters after the same sign in some cases. For example, a plurality of configurations having the substantially same functional configuration are distinguished as a Web server 300a, a control module server 300b and the like as needed. However, in the case that the plurality of constituents having the substantially same functional configuration are not needed to be distinguished individually, only the same sign is attached thereto. For example, in the case that the Web server 300a, the control module server 300b and the like are not needed to be distinguished in particular, they are referred to as the servers 300 simply.

### (Control Apparatus: 100)

The control apparatus 100 is an apparatus having functions of controlling the controlled apparatuses 200 via the home network 20, and for example, is a mobile communication apparatus such as a smart phone. The control apparatus 100 is provided with a browser and can communicate with the servers 300 connected to the Internet 30 via the mobile network 10. The control apparatus 100 can provide various kinds of service for users by performing applications acquired from the servers 300 using the browser. For example, the service of providing EPG: Electronic Program Guide of TV broadcasting can be considered.

The browser built in the control apparatus 100 is preferable to be a browser compatible with the standard of HTML (Hyper Text Markup Language) 5 or later. HTML5 is the latest version of HTML at the present moment which is a markup language for describing documents on the Web, and is now being standardized by W3C. According to the HTML5 standard, the application platform on which Web applications high in function and performance can be executed compared with the HTML4 standard can be realized. Therefore, it is expected that browsers compatible with the HTML5 are hereafter built in not only PCs and smart phones but digital appliances such as TV sets and that more various Web applications and Web service are developing.

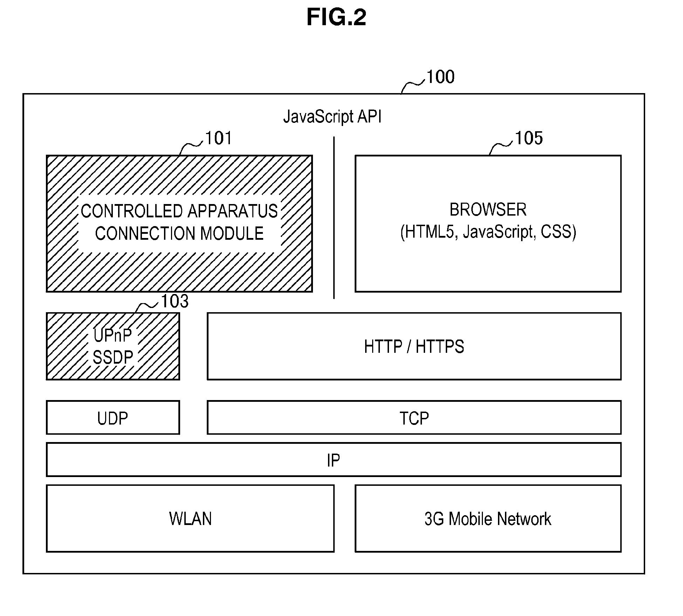

Herein, a software configuration of the control apparatus 100 is described with reference to Fig. 2. Fig. 2 is an explanatory drawing indicating a software stack of the control apparatus 100. In addition to software implemented in a typical smart phone, the control apparatus 100 is implemented with an SSDP 103 (Simple Service Discovery Protocol) as a service discovery protocol in the UPnP standard, and a controlled apparatus connection module 101.

The controlled apparatus connection module 101 discovers a UPnP device using the SSDP 103, and provides message communication with the discovered UPnP device using HTTP connection to Web applications via Java(R)ScriptAPI. For example, the control apparatus 100 may be implemented with a service discovery protocol such as the Boujour standard compatible with IP home networks other than the SSDP 103. The API of the message communication provides a function of transmitting messages as HTTP bodies in HTTP methods designated as XMLHTTPRequest. In the UPnP, these methods can provide general-purpose communication in the case that a SOAP message is transmitted using HTTP and the message is transmitted using HTTP also in other home network standards. In the AP of the general-purpose message communication, the HTTP connection is necessary to be limited only to the UPnP device discovered as a device in view of security.

### (Controlled Apparatus: 200)

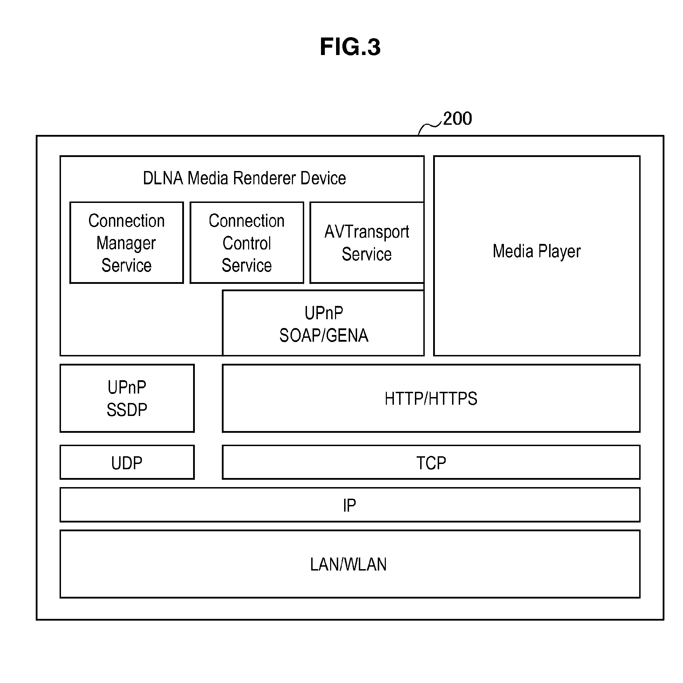

The controlled apparatus 200 is an apparatus having a network connection function compatible with UPnP/DLNA. The controlled apparatus 200 can operate according to control from the control apparatus 100. The controlled apparatus 200 is an apparatus that has a network connection function from among, for example, TV sets, household video processing apparatuses (BD recorder, DVD recorder, video deck and the like), household game machines, music playback apparatuses, and other household appliances. Typically, the controlled apparatus 200 may configured from a software stack as illustrated in Fig. 3. Moreover, the controlled apparatus 200 may include a storage (not shown) storing a list containing candidate information of control modules which the control apparatus 100 uses. As described later, this list is stored in the storage, for example, as part of UPnP Device Description.

### (Server: 300)

The server 300 is a server connected to the Internet 30. The server 300 includes a Web server 300a and a control module server 300b described later, for example. The Web server 300a has a function of providing Web applications described in languages such as HTML and Java(R)Script in response to request from the browser 105. Moreover, the control module server 300b is a server providing control modules for controlling the controlled apparatuses 200 in response to request from the browser 105.

### (2. Functional Configuration of Control Apparatus)

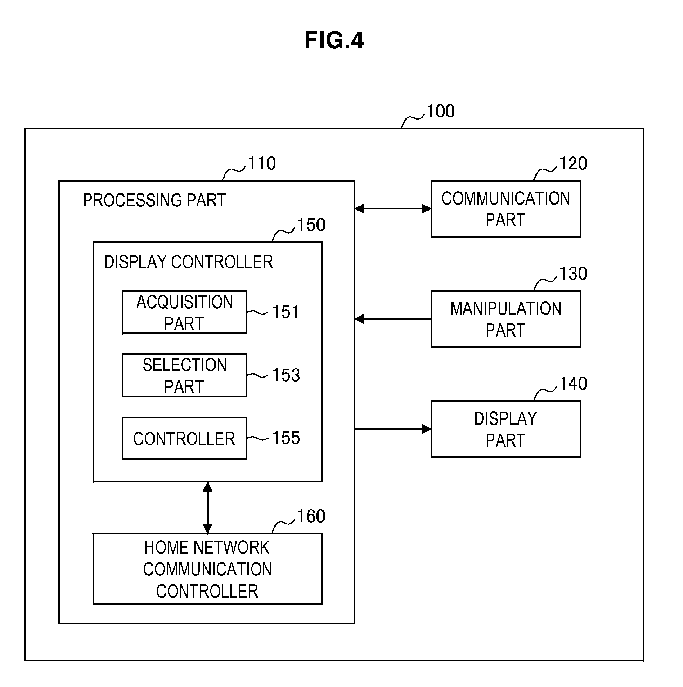

Next, a functional configuration of the control apparatus 100 is described with reference to Fig. 4. Fig. 4 is a block diagram illustrating the functional configuration of the control apparatus 100.

The control apparatus 100 mainly includes a processing part 110, a communication part 120, a manipulation part 130 and a display part 140.

### (Processing Part 110)

The processing part 110 is implemented by a processing device such, for example, as a CPU (Central Processing Unit), and has functions of controlling the whole operations of the control apparatus 100. Each function which the processing part 110 has is achieved by the processing part 110 reading out a control program from a recording medium such as a ROM (Read Only Memory) and a RAM (Random Access Memory) storing control programs in which processing procedures realizing these functions are described, and interpreting the program to execute, actually.

The processing part 110 mainly has functions of a display controller 150 and a home network communication controller 160. The display controller 150 has a function of a browser, for example, and in the embodiment, a function of executing Web application programs acquired from the Web server 300a via the Internet 30 and controlling display of screens to be generated on the display part 140. An acquisition part 151, a selection part 153 and a controller 155 are part of the Web application programs described in Java(R)Script, and the display controller 150 serves as functions of the acquisition part 151, selection part 153 and controller 155 by the execution of the Web application programs.

The acquisition part 151 has a function of acquiring program files of control modules in which processing procedures regarding control of the controlled apparatuses 200 are described. Here, the acquisition part 151 acquires a control module which is selected by the selection part 153 explained next and is used for control of a controlled apparatus 200. Herein, the control module is a program for defining functions regarding operations of the controlled apparatus 200, and generating messages for allowing the execution of the functions in a form of the controlled apparatus 200 being capable of interpretation.

The selection part 153 has a function of selecting a control module used for control of a controlled apparatus 200 out of a plurality of candidates of control modules in which processing procedures regarding control of the controlled apparatuses 200 are described. The selection part 153 selects a control module used for control of the controlled apparatus 200 based on a list of control modules acquired from the controlled apparatus 200, for example. Herein, the list of control modules is described in an extended region in UPnP Device Description, for example, and includes identifiers id for identifying the control modules, URL information indicating storage locations of the control modules, and the like. This list of control modules is generated by manufacturers of the controlled apparatuses 200 or the like beforehand, for example, whereas may be described sequentially from the control module high in priority of usage. Moreover, the selection part 153 may select a control module described in the Web application.

The selection part 153 can select the control module using any other conditions. For example, the selection part 153 can select the control module based on whether or not the target control module is available by the Web application in execution, abstraction degrees of the control modules, presence or absence of bug information of the control modules, or the like. Or, the selection part 153 may select the control module included in the Web application itself when any suitable control module does not exist in the list of control modules. Moreover, a plurality of control modules which define control functions with different abstraction degrees from one another can be included in the list of control modules. Thereby, a developer of the Web application providing service can select the control module with the abstraction degree suitable for the service. Moreover, the selection part 153 can select the control module used for control of the controlled apparatus 200 based on priorities of the candidates of control modules. For example, these priorities may be information provided in the order of the sequence in the list.

The controller 155 has a network device control function of controlling the controlled apparatus 200 according to the control module selected by the selection part 153. Specifically, the controller 155 has a function of generating control messages in a form in accordance with UPnP in this case, which is a form based on which the controlled apparatus 200 can interpret control commands for operating functions of the controlled apparatus 200, by executing the control program described in Java(R)Script and the like, for example.

The home network communication controller 160 provides a function for the control apparatus 100 connecting to the controlled apparatus 200 via the home network 20 to transmit and receive various messages, and corresponds to the function of the controlled apparatus connection module 101. The home network communication controller 160 connects to the controlled apparatus 200 via the communication part 120 in a wireless manner according to control of the display controller 150.

### (Communication Part 120)

The communication part 120 is a communication interface constituted of a communication device and the like for connecting to the mobile network 10 or home network 20, for example. Moreover, the communication part 120 may be a communication device compatible with wireless LANs (Local Area Networks) or a wired communication device communicating in a wired manner. This communication part 120 transmits and receives messages in accordance with UPnP/DLNA to and from the controlled apparatuses 200. Moreover, the communication part 120 transmits and receives data to and from the servers 300 according to control of the display controller 150.

### (Manipulation Part 130)

The manipulation part 130 is constituted of input means such, for example, as a button, a keyboard, a touch panel, a mouse, a microphone, a switch and a lever, which means is for the user inputting information, input control circuits generating input signals based on the input from the user to output them to the processing part 110, and the like. The user of the control apparatus 100 uses this manipulation part 130, and thereby, can perform manipulation input to the display screen provided by the display controller 150, for example.

### (Display Part 140)

The display part 140 provides the display screen with respect to the user according to control of the display controller 150. For example, the display part 140 may be a display device such as a liquid crystal display (LCD) device, an OLED (Organic Light Emitting Diode) device, and a CRT (Cathode Ray Tube) display device.

### (3. Control Operations)

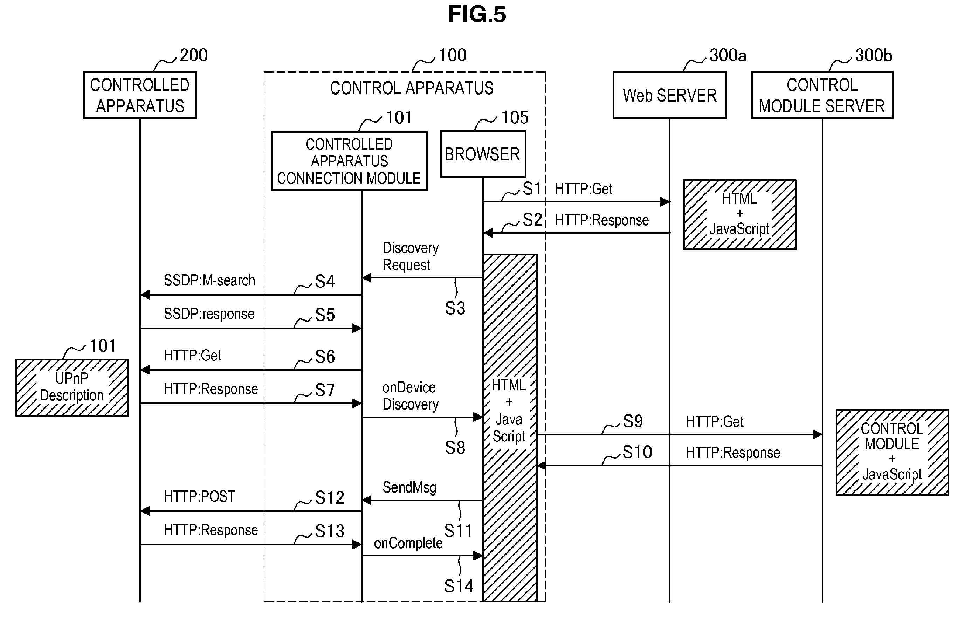

Next, operations regarding control of the controlled apparatus 200 by the control apparatus 100 having been described above are described with reference to Fig. 5. Fig. 5 is a sequence diagram illustrating operations of the control system.

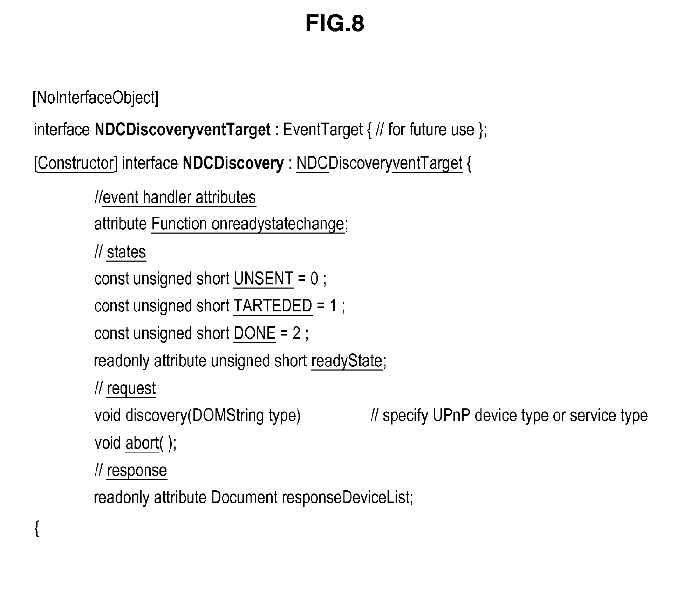

The browser 105 of the control apparatus 100 issues HTTP Request to a URL designated by the user (S1). Then, upon reception of the HTTP Request from the control apparatus 100, the Web server 300a indicated by this URL transmits a Web application (HTML+Java(R)Script) in response to the request to the browser 105 of the control apparatus 100 (S2). Herein, the browser 105 executes the Web application received in step S2. Processes of the browser 105 described below are performed according to control of the Web application acquired in step S2. The Web application requests device discovery through the standard API of the browser 105, designating required UPnP Device Class (S3). One example of definition of the API used here is illustrated in Fig. 8. Fig. 8 is a diagram illustrating one example of the API used for the device discovery. In addition, the API indicated here is also used in step S8 described below.

In response to the request from the browser 105, the controlled apparatus connection module 101 searches for a UPnP device for which an SSDP (Simple Service Discovery Protocol): M-Search message in the UPnP standard is designated by issuing a UDP of broadcasting (S4). The controlled apparatus 200 having received the message in step S4 returns a response of the M-Search to the control apparatus 100 when the controlled apparatus is relevant to the designated DeviceClass (S5). In addition, only one controlled apparatus 200 is illustrated in Fig. 5, whereas the situation is not limited to this. The control apparatus 100 transmits messages of device search to plural controlled apparatuses 200, and only the controlled apparatuses 200 relevant to the designated DeviceClass return the responses to the control apparatus 100.

The controlled apparatus connection module 101 of the control apparatus 100 acquires a URL of UPnP Device Description from the responded message of the M-Search. Then, the controlled apparatus connection module 101 transmits an acquisition request message of the UPnP Device Description to the acquired URL (S6). The controlled apparatus 200 returns the UPnP Device Description in HTTP Response (S7).

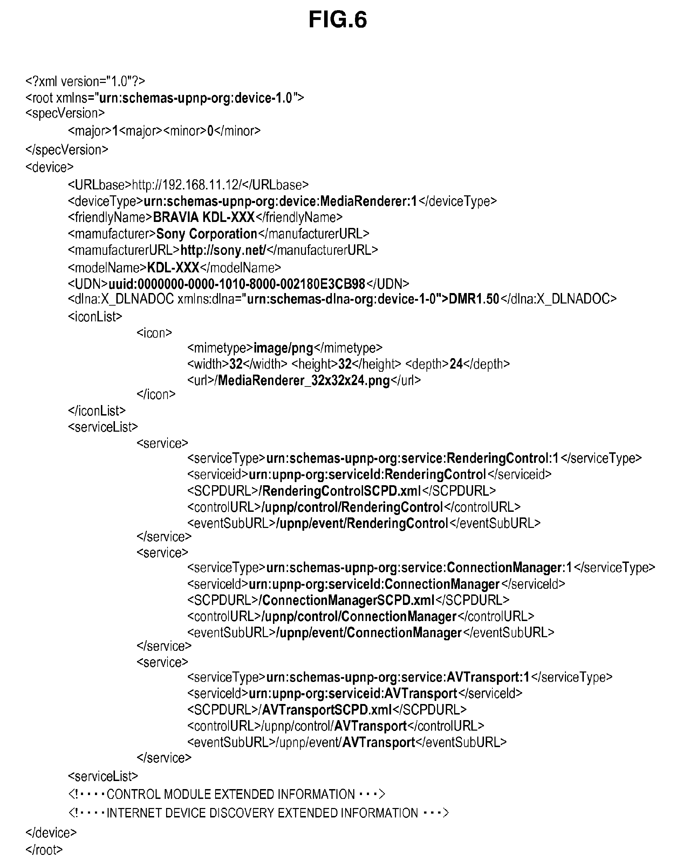

Herein, one example of the UPnP Device Description is illustrated in Fig. 6. Fig. 6 is an explanatory drawing of the one example of the UPnP Device Description acquired from the controlled apparatus 200. The UPnP Device Description may include information of Device Type and Service Type of the controlled apparatus 200, for example. Moreover, the UPnP Device Description includes extended information regarding control modules and extended information regarding device discovery from the Internet in the embodiment.

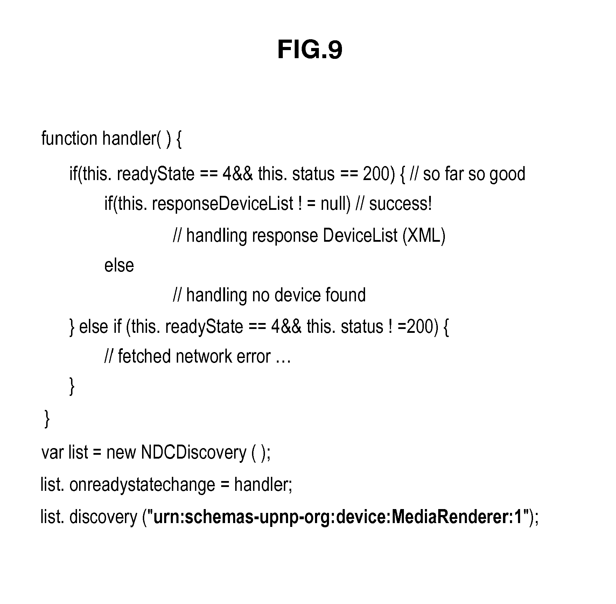

The controlled apparatus connection module 101 holds the acquired UPnP Device Description, and generates an event of onDeviceEvent of the API in Java(R)Script. According to this event, the browser 105 acquires UPnP Device Type and Service Type of the discovered device, and a list of control modules (S8). Herein, sample codes of the Web application executed by the browser 105 are illustrated in Fig. 9. Fig. 9 is an explanatory drawing illustrating the sample codes of the Web application.

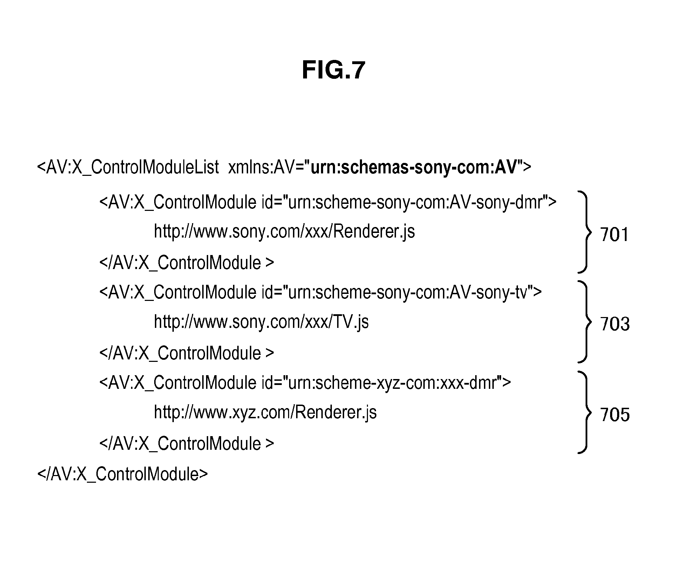

The list of control modules acquired here may be provided as illustrated in Fig. 7 for example. Fig. 7 is an explanatory drawing illustrating one example of the control module list. This control module list is part of the UPnP Device Description illustrated in Fig. 6, and includes plural pieces of control module information 701, 703 and 705. Each piece of the control module information can include an identifier id for identifying the control module and storage location information such as a URL indicating a storage location of the control module.

Then, the browser 105 determines the suitable control method out of the control module list acquired in step S8, and downloads the control module corresponding to this from the control module server 300b. For this purpose, the browser 105 transmits an acquisition request message of the control module to the control module server 300b (S9). In response to the request, the control module server 300b transmits the control module to the browser 105 (S 10).

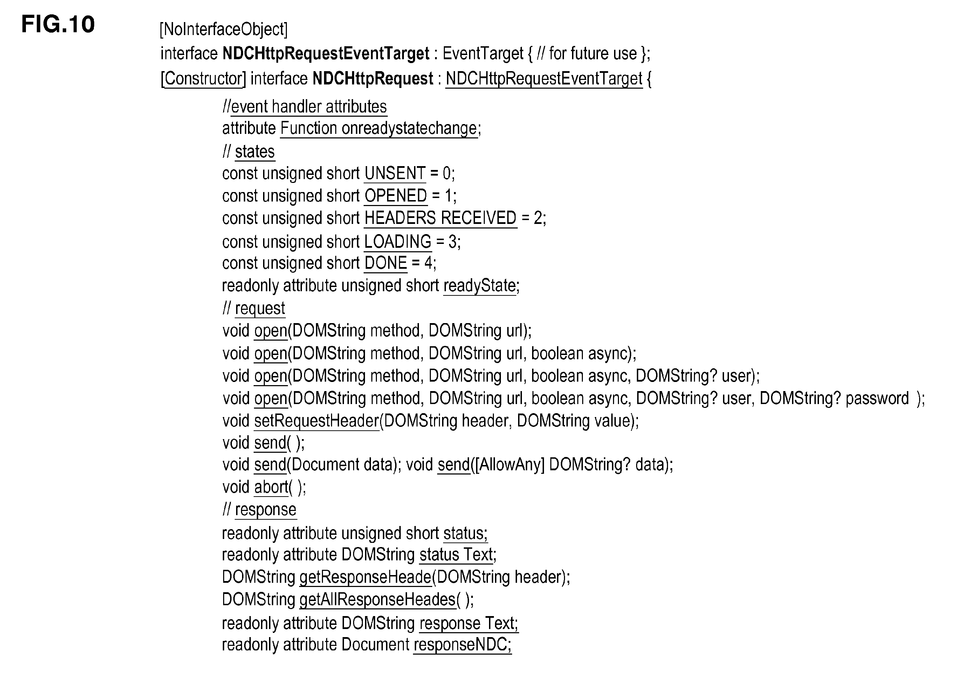

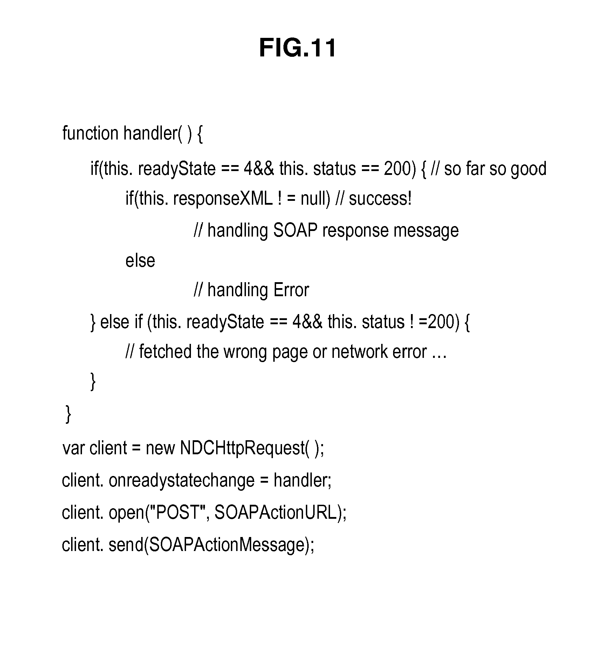

The Web application executed by the browser 105 calls the known standard API, and communicates with the controlled apparatus 200. One example of the API used at this stage is illustrated in Fig. 10. Fig. 10 is an explanatory drawing illustrating one example of definition of the standard API for communicating with the controlled apparatus. The control module creates a SOAP message of a control command of the service regular in the UPnP standard to hand it over to the controlled apparatus connection module 101 via SendMessage API (constituted of functions such as open() and send() in Fig. 10). In this case, it is needed to be transmitted in a POST method of HTTP of SOAP. For this reason, post is designated also in the method of the SendMessage, and SOAPActionURL is designated as a URL of the transmission destination (S11). Herein, sample codes while the control module uses the standard API are illustrated in Fig. 11. Fig. 11 is an explanatory drawing illustrating the sample codes while the control module uses the standard API.

Next, the controlled apparatus connection module 101 transmits the URL, method and message designated by the API for the SendMessage to the controlled apparatus 200 in the HTTP protocol (S12). At this stage, the control module identifies controllURL of the UPnP Device Description from the Service type, and by combining it with baseURL, determines the URL to which the HTTP message is sent. Message is described in Message Body of HTTP Request.

Service of the controlled apparatus 200 specifies the requested service from the received URL, processes a SOAP action in the Message Body of the HTTP Post Request, and after that, returns HTTP Response to the control apparatus 100 (S13).

Upon receiving the response from the controlled apparatus 200, the controlled apparatus connection module 101 generates an event of OnComplete, and hands over the MesssageBody of the HTTP Response to the browser 105 (S14). A SOAP response as the MessageBody is interpreted by the control module which is executed by the browser 105, and is notified to the Web application via the API of the control module.

The operations in step S1 to step S14 in Fig. 5 described above illustrate operations of the Web application discovering the DLNA device and downloading the control module suitable for the control of the device to control the controlled apparatus 200.

Herein, it is supposed that the Web application selects the control module to be used out of the control module list in step S9, whereas the present technology is not limited to such an example. For example, when there is no suitable control module, the Web application may create a message in the regular protocol based on UPnP device Type and Service Type directly. Moreover, the Web application may acquire and use a substitute control module having the same function from the known location based on id of the control module in the control module list.

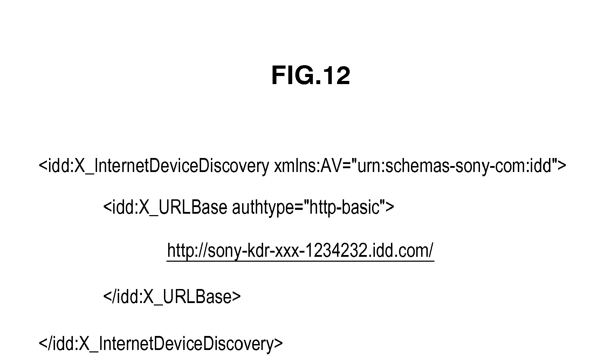

In addition, extended information regarding device discovery from the Internet is illustrated in Fig. 12. Fig. 12 is a diagram illustrating one example of the extended information regarding device discovery from the Internet. The extended information illustrated here is information which the control apparatus 100 uses, and thereby, which is for connecting to the controlled apparatus 200 based on the information of the UPnP Device Description of the device discovered in the past, under the circumstance where the control apparatus 100 is connected to the Internet 30 but not connected to the home network 20.

In this case, by holding the information of the UPnP Device Description of the controlled apparatus 200 discovered in the past, when having determined the environment incapable of connecting to the home network 20, the control apparatus 100 does not perform step S3 and step S4 in Fig. 5, uses the URL in <idd:X_URLBase> included in the extended information for the Internet device discovery instead of the ordinary BaseURL, tries to acquire the Device Description in step S5, and thereby, can attain the access to the controlled apparatus 200 which is connected to the home network. As the precondition here, it is necessary that the global address of Gateway of the home network be configured in the dynamic DNS service so as to correspond to the URL in <idd:X_URLBase> and that the Gateway be configured such that the HTTP connection is forwarded to the home network equipment.

### (4. Example of Control (Recording of TV Program))

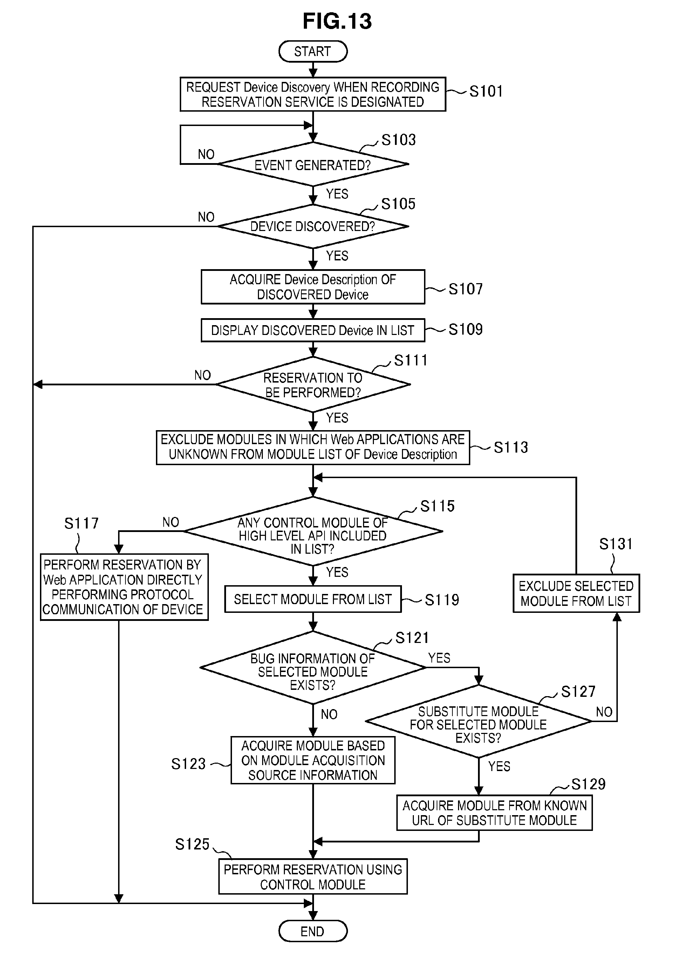

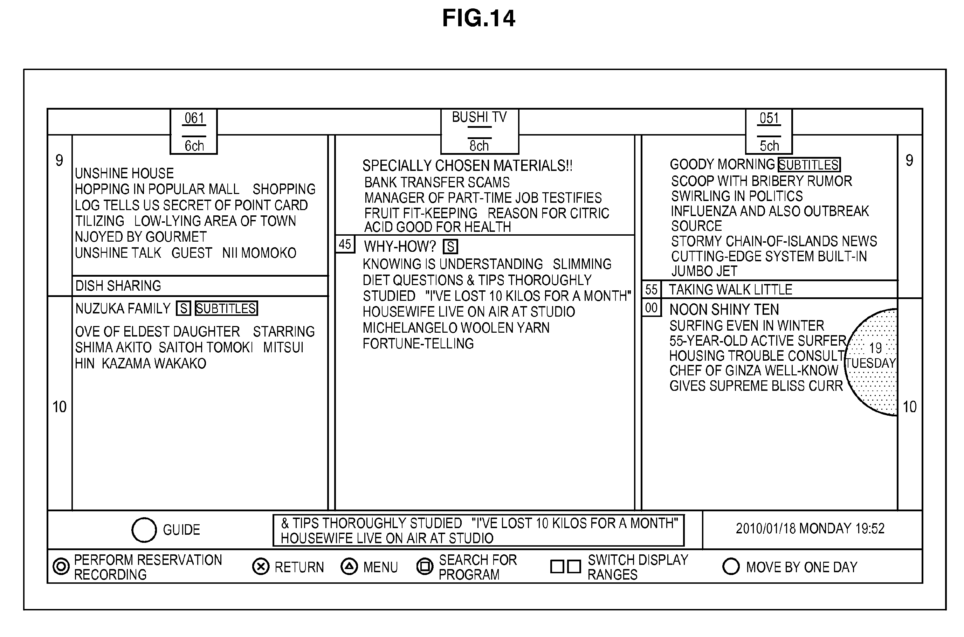

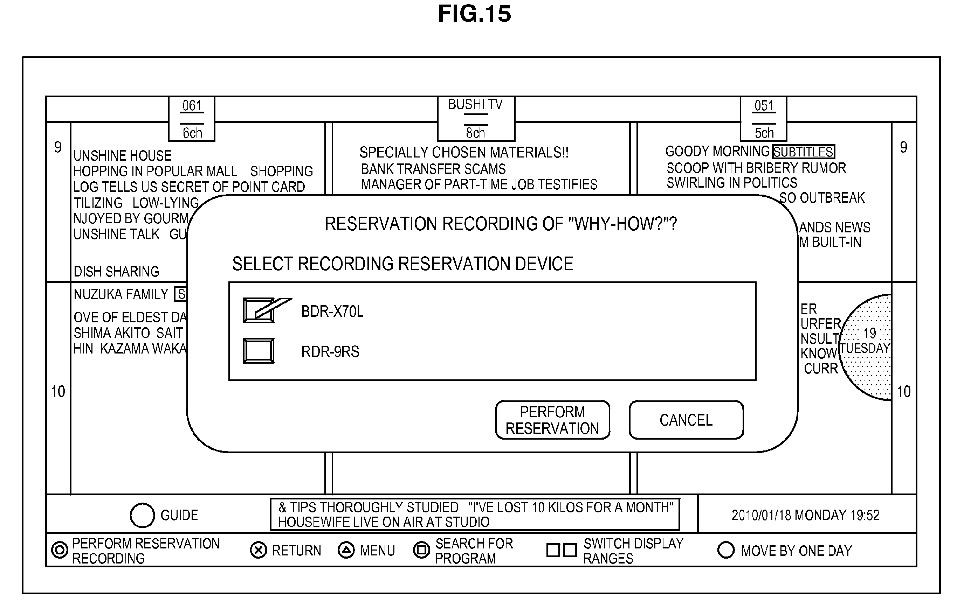

Next, an example of TV program recording service using the control system according to an embodiment is described with reference to Fig. 13 to Fig. 15. Fig. 13 is a flowchart illustrating operations of the control apparatus 100 according to the embodiment in the case of application thereof to the TV recording service. Moreover, Fig. 14 is an explanatory drawing illustrating one example of display screen in the example of Fig. 13. Fig. 15 is an explanatory drawing illustrating another example of display screen in the example of Fig. 13.

In addition, the flowchart in Fig. 13 illustrates operations in the control apparatus 100, whereas such operations correspond to the sequence illustrated in Fig. 5, and therefore, are described also with reference to Fig. 5 appropriately.

At first, when the user performs manipulation on a screen which the browser 105 of the control apparatus 100 displays to request starting reservation recording service, the browser 105 of the control apparatus 100 acquires and executes a Web application constituted of HTML and Java(R)Script from the Web server 300a. For example, a program table screen illustrated in Fig. 14 is displayed. Then, when the user selects one program from this program table screen to perform recording reservation manipulation, the Web application which the browser 105 executes requests Device Discovery to the controlled apparatus connection module 101 (S101). This operation in step S101 corresponds to the request in step S3 of Fig. 5.

In addition, in the following description, when it is described "the browser 105 does", a process is supposed to be processed by the Web application which the browser 105 executes, which application is the subject. Then, the browser 105 determines whether or not an event is generated (S103). The event herein referred to includes an event such as notification that the controlled apparatus connection module 101 searching for devices responding to the request has completed, for example.

Upon reception of the notification of the event, the browser 105 determines whether or not any device is discovered, based on the content of the notification (S105). When any device (controlled apparatus) responding to the request is not discovered, the processes are ended. On the other hand, when any controlled apparatus 200 responding to the request is discovered, the browser 105 acquires Device Description of the discovered controlled apparatus 200 (S107). Then, the browser 105 displays a list screen displaying the discovered controlled apparatus 200 in list (S109). For example, one example of this list screen is illustrated in Fig. 15.

Then next, the browser 105 determines whether or not the reservation is performed (S111). As to such determination, the reservation execution is determined when the controlled apparatus 200 as a recording reservation device is selected and a reservation execution button is pushed with respect to the display screen illustrated in Fig. 15, for example. Thus, when the reservation execution manipulation is made, the browser 105 starts selection processing of the control module used for control of the controlled apparatus 200.

Hereinafter, in step S113 and later ones, one example of the selection processing of the control module used for control of the controlled apparatus 200 is illustrated, whereas the present technology is not limited to such an example. It is needless to say that various modifications are applicable.

At first, the browser 105 excludes ones in which Web applications are unknown out of the module list of the Device Description (S113). Then, it is determined whether or not any control module of high level API is included in this list (S115). Herein, when any control module of high level API is not included in the list, the Web application performs protocol communication of the controlled apparatus 200 directly to perform the reservation (S117). On the other hand, when any control module of high level API is included in the list, the browser 105 selects a module from the list (S119). At this stage, the browser 105 may select a module with high priority in the list, for example. For example, for the purpose of improving reciprocal connectivity between devices from different manufacturers, it is preferable to perform control using an upper-level interface high in abstraction degree compared with the use of a low-level network protocol.

Then, the browser 105 determines the presence or absence of bug information of the selected module (S121). When no bug information exists in the selected module, acquisition source information of the relevant selected module is acquired from the module list of the Device Description, and the selected control module is acquired (S123). Then, the browser 105 uses the acquired control module to perform the reservation execution (S125).

On the other hand, when some bug information exists in the selected module in the determination of step S121, the browser 105 next determines whether or not any substitute module for the selected module exists (S127). As to such determination, when information regarding provision of the substitute module (for example, an acquisition URL of the substitute module) along with the bug information, for example, is provided, the determination is made based on such information.

Then, when it is determined that any substitute module exists from the determination in step S127, the browser 105 acquires the relevant substitute module from the known URL of the substitute module (S129). In this case, in step S125, the browser 105 performs the reservation using the acquired substitute module. On the other hand, when it is determined that no substitute module exists from the determination in step S127, the browser 105 excludes the selected module from the list (S131). Then, the flow returns to the determination in step S 115.

### (5. Example of Effects)

As above, the control system 1 according to one embodiment of the present disclosure is described, and according to such a control system 1, a control system can be realized excellent in versatility, extensibility and reciprocal connectivity. Specifically, the control apparatus 100 can use the control module for controlling the controlled apparatus 200 by selecting and downloading it out of plural candidates. Herein, such selection may be performed by the Web application executed by the browser 105. At this stage, the Web application may select the control module to be used out of the list of the control modules provided from the controlled apparatus 200, or may select the control module to be downloaded using information of the control modules described in the Web application itself. Therefore, control of the controlled apparatus 200 can be performed using a control module selected for each Web application.

The preferred embodiments of the present disclosure have been described above with reference to the accompanying drawings, whilst the present disclosure is not limited to the above examples. It is apparent to those skilled in the technical field of the present disclosure that various alternations and modifications may occur within the technical scope described in the appended claims, and it should be understood that they also will naturally come under the technical scope of the present disclosure.

For example, in the above embodiment, the description is made using an example of reservation recording of a program, whereas the present disclosure is not limited to such an example but is applicable to any service as long as the service can be realized by the control apparatus 100 controlling operations of the controlled apparatus 200.

Moreover, in the above embodiment, the method of performing device control by communication in accordance with DLNA is described, whereas the present disclosure is not limited to such an example but is applicable to ones for which communication is performed just using HTTP.

Incidentally, in the present specification, the steps described in the flowcharts and the sequence diagrams include processes performed in the described order in time series, naturally, and also processes performed in parallel or individually even when they are not necessarily processed in time series. It is needless to say that even the steps processed in time series can be changed in regard to their order appropriately in some cases.

### Reference Signs List

| | |
|---|---|
| 100 | control apparatus |
| 110 | processing part |
| 120 | communication part |
| 130 | manipulation part |
| 140 | display part |
| 150 | display controller |
| 151 | acquisition part |
| 153 | selection part |
| 155 | controller |
| 160 | home network communication controller |
| 200 | controlled part |
| 300 | server |
| 300a | Web server |
| 300b | control module server |

## Claims

1. A control apparatus comprising:
an acquisition part acquiring a control module selected from a plurality of candidates for the control module in which processing procedures regarding control of a controlled apparatus are described; and
a controller controlling operation of the controlled apparatus according to the processing procedures in the control module acquired by the acquisition part.

2. The control apparatus according to claim 1, further comprising:
a selection part selecting the control module used for control of the controlled apparatus from the plurality of candidates for the control module.

3. The control apparatus according to claim 2, wherein the selection part acquires a list in which information indicating an acquisition source of a candidate for the control module is described from the controlled apparatus, and selects the control module used for control of the controlled apparatus based on the list.

4. The control apparatus according to claim 3, wherein the selection part selects the control module used for control of the controlled apparatus from the control module described in an application program in which processing procedures of the acquisition part and the selection part are described and a control module indicated in the list.

5. The control apparatus according to claim 3, wherein the list includes the plurality of control modules defining control functions with abstraction degree different from one another.

6. The control apparatus according to claim 5, wherein
the list includes information indicating priority of each control module, and
the selection part selects the control module used for control of the controlled apparatus based on the priority.

7. The control apparatus according to claim 5, wherein the selection part selects the control module used for control of the controlled apparatus based on the abstraction degree.

8. The control apparatus according to claim 1, wherein the control module is a program for defining a function regarding operation of the controlled apparatus, and generating a message for performing the function in a form that the controlled apparatus is capable of interpreting the message.

9. The control apparatus according to claim 4, wherein the application program allows, by being executed on a browser, the control apparatus to function as the acquisition part and the selection part.

10. A control system comprising:
a controlled apparatus operating according to control from an external device; and
a control apparatus including
an acquisition part acquiring a control module selected from a plurality of candidates for the control module in which processing procedures regarding control of the controlled apparatus are described, and
a controller controlling operation of the controlled apparatus according to the control module acquired by the acquisition part.

11. The control system according to claim 10, wherein the controlled apparatus includes a storage storing a list including candidate information of the control module.

12. A control method realized by performance of predetermined processing procedures by a processing part of a control apparatus controlling operation of a controlled apparatus, the processing procedures comprising:
acquiring a control module selected from a plurality of candidates for the control module in which processing procedures regarding control of the controlled apparatus are described; and
controlling operation of the controlled apparatus according to the control module acquired in the acquisition step.
